# EUROPÄISCHE PATENTSCHRIFT

(11) **EP 0 632 954 B1**
(45) Veröffentlichungstag und Bekanntmachung des Hinweises auf die Patenterteilung: **03.12.1997**
(21) Anmeldenummer: 93114450.5
(22) Anmeldetag: 08.09.1993
(51) Int. Cl.: A01D 34/70, E01H 1/08

(54) **Bodenbearbeitungsgerät mit einem Sammelbehälter**
Earth working tool with loading capacity
Machine de travail du sol avec benne chargeuse

(30) Priorität: 06.07.1993 DE 9310056 U
(43) Veröffentlichungstag der Anmeldung: 11.01.1995
(73) Patentinhaber: WIEDENMANN GMBH, D-89192 Rammingen (DE)
(72) Erfinder:
(74) Vertreter: Flügel, Otto, Dipl.-Ing.

(56) Entgegenhaltungen:
- FR-A- 2 530 920
- FR-A- 2 602 953
- US-A- 4 047 368
- US-A- 4 922 696

## Beschreibung

Die Erfindung betrifft einen Sammelbehälter für Kehrgut, Mähgut oder dgl. mit einem von der Zapfwelle eines Träger- oder Zugfahrzeuges ausgehend über eine Gelenkwelle angetriebenen Ladegebläse, dessen Ausgang in den Sammelbehälter mündend angeordnet und dessen Eingang über eine Förderleitung an ein Kehrgutaufnahmegerät, Mähgerät oder dgl. angeschlossen ist, wobei das Ladegebläse, der gebläseseitige Gelenkwellenanschluß und eine getriebliche Übertragungseinrichtung zwischen diesem und dem Rotor des Ladegebläses im Bereich der dem Träger- oder Zugfahrzeug zugewandten, zur Fahrfläche gesehen von grundsätzlichen Verlauf her gegen die Fahrtrichtung geneigt verlaufenden Sammelbehälter-Frontwandung angeordnet sind, die gemeinsam mit einer dem Träger- oder Zugfahrzeug abgewandt angeordnete, um eine im oberen Behälterbereich befindliche horizontal und senkrecht zur Fahrtrichtung verlaufende Achse verschwenkbaren Falle den Innenraum des Sammelbehälters begrenzt.

Es ist bekannt - z.B. DE-U-9111081 -, die dem Schleppfahrzeug - Kleintraktor - benachbarte Wandung eines Sammelbehälters derart schräg dem Boden zu und entgegen der Fahrtrichtung geneigt auszubilden, daß das aufgenommene Gut durch Öffnen der Falle des Behälters ohne dessen gezieltes Neigen herausgleitet. In dem Raum unterhalb dieser Wandung außerhalb des Behälters ist ein Sauggebläse und dessen von dem gebläseseitigen Anschluß einer Gelenkwellenverbindung ausgehender Antrieb untergebracht. Dabei ist ein Chassisrahmen vorgesehen, der das Sauggebläse nebst Gelenkwellenanschluß und auch den eigentlichen Behälter trägt. Diese Ausbildung ist im Vergleich zu Sammelbehältern mit etwa vertikalem Verlauf der dem Schleppfahrzeug zugewandten Wandung, also der Behälterfrontwandung, mit in Fahrtrichtung davor fest zugeordnetem Sauggebläse in Fahrzeuglängsrichtung gesehen bereits verhältnismäßig kurz bemessen.

Der Erfindung liegt die Aufgabe zugrunde, einen Sammelbehälter der eingangs genannten Art zur Verfügung zu stellen, der hinsichtlich der Fahrtrichtung des Träger-oder Zugfahrzeuges noch raumsparender und mit weniger Einzelbauelementen auskommend ausgebildet ist.

Diese Aufgabe wird erfindungsgemäß dadurch gelöst, daß die Sammelbehälterfrontwandung als tragendes Halte- und Lagerelement für das Ladegebläse und den gebläseseitigen Gelenkwellenanschluß, d.h. den daran angeschlossenen Wellenstumpf, der ein Getriebeelement für die Antriebsverbindung zu dem Rotor des Ladegebläses trägt, ausgebildet ist.

Durch die erfindungsgemäße Ausbildung der Sammelbehälterfrontwandung wird diese zur Tragkonstruktion für das zugeordnete Ladegebläse nebst behälterseitigem Gelenkwellenanschluß sowie getrieblicher Übertragung von diesem an den Rotor des Ladegebläses. Die dafür erforderliche Festigkeit und Formhaltigkeit erübrigt insoweit einen Chassisrahmen oder eine sonstige gesonderte Haltekonstruktion. Dadurch verliert diese Sammelbehälterfrontwandung im Sinne der Erfindung ihre ausschließliche Behälterbegrenzungsfunktion. Aufgrund der Integration der Behälterwandung - zumindest bereichsweise - als Behälterinnenseite einerseits und Halteelement für das Ladegebläse und dessen Antrieb andererseits werden gesonderte Chassisrahmenkonstruktionen und dgl. eingespart mit dem Erfolg, daß das Ladegebläse und dessen Antrieb - gebläseseitiger Gelenkwellenanschluß - näher auf den Innenraum des Sammelbehälters zu angeordnet und gehalten sind, so daß die Ausdehnung in Fahrtrichtung des Fahrzeugs, was den Sammelbehälter und dessen Ladegebläse anbelangt, entsprechend kürzer bemessen werden kann. Dadurch erhöht sich die Manövrierfähigkeit des mit dein Sammelbehälter versehenen Fahrzeuges, d.h. die Einheit von Fahrzeug und Behälter. Grundsätzlich kann die Anordnung von Ladegebläse (Sauggebläse) und dessen Antrieb, insbesondere gebildet aus einem an das gebläseseitige Gelenkwellenende angeschlossenen Wellenstumpf und Keilriementrieb von diesem ausgehend zum Rotor des Gebläses hin, außerhalb des Behälterinnenraumes, also insoweit an die in Fahrtrichtung nach vorne weisende Seite der Sammelbehälterfrontwandung getroffen sein. Dann würde diese nach vorne weisende Außenseite mit entsprechenden Lagerhalterungen versehen sein. Das schließt nicht aus, daß diese Sammelbehälterfrontwandung entsprechend in das Behälterinnere zur Falle hin ausgewölbt ausgebildet ist, und zwar durchaus auch soweit, daß in Seitenansicht gesehen das Ladegebläse bzw. dessen Antrieb in den von der Falle des Behälters umgriffenen Hohlraum hineinragen kann.

In hervorgehobener Ausführung ist zumindest eine der Wellen -Rotorwelle des Ladegebläses und/oder Wellenstumpf des gebläseseitigen Gelenkwellenanschlusses - derart angeordnet, daß die aus konstruktiver Sicht gesehene Sammelbehälterfrontwandung durchgriffen wird. Dies bedeutet, daß die den Gebläserotor mit dem Wellenstumpf der Gelenkwelle verbindenden Getriebeeinrichtunen - insbesondere Keilriemenräder mit diese verbindender Keilriemeneinrichtung - aus dieser Vorstellung heraus im Innenraum des Behälters gelegen sind. Natürlich müssen diese Getriebeelemente gegenüber dem von dem aufgenommenen Gut eingenommenen Raum im Behälterinneren abgeschirmt sein, wozu entsprechend schwache Abdeckungen aus dünnem Blech und/oder Kunststoff Verwendung finden. Betrachtet man vom Behälterinneren aus die sich dergestalt in Fahrtrichtung bietende Ansicht der Sammelbehälter-Frontwandinnenseite, so setzt sich diese bereichsweise aus der in Richtung auf die Halterung des Ladegebläses und des Wellenstumpfes für den Anschluß der Gelenkwelle tragend ausgebildeten Frontwandung einerseits und bereichsweise aus der Abdeckung der zwischen Wellenstumpf und Ladegebläserotor vorgesehenen Getriebeeinrichtung andererseits zusammen.

Für den Anschluß des mit seiner Rotorachsrichtung vorzugsweise in Fahrtrichtung angeordneten Ladegebläses und dessen Antrieb über die Gelenkwelle von der Zapfwelle des Träger- bzw. Zugfahrzeugs aus kann die Sammelbehälter-Frontwandung an eine solche Gebläsegehäuseanordnung derart angepaßt sein, daß sie in diesem Bereich einen Wandungsverlauf aufweist, der demjenigen der Gebläsegehäusewandung entspricht, die von der Funktion des Abgleitens aufgenommenen Sammelgutes bei Öffnen der Behälterfalle gebotenen Schrägausbildung abweicht. Insoweit ist die Sammelbehälter-Frontwandung "strukturiert" ausgebildet, d.h. nicht alleine von der zumindest bereichsweisen Schrägausbildung für das Abgleiten des Sammelgutes bestimmt, sondern nach Maßgabe der Haltefunktion für das Ladegebläse und dessen Antrieb geprägt. Dies führt dazu, daß die Sammelbehälterfrontwandung bspw. bei seitlich der Fahrzeuglängsachse angeordneten Ladegebläse in diesem Bereich eine andere Formgebung aufweist als in den hinsichtlich der Fahrzeuglängsachse seitlich gegenüberliegenden Bereich, dergestalt, daß dort wegen des fehlenden Ladegebläses eine den Innenraum des Behälters begünstigende Formgebung vorgesehen ist. Durch diese angepaßte Formgebung bzw. die integrierte Aufnahme des Ladegebläses erhält man eine "geklüftete" Wandung, die aufgrund der nicht glatten Formgebung entsprechend biegesteif und damit der geforderten Halterung für Ladegebläse und Antrieb festigkeitsmäßig entgegenkommend ausgebildet ist.

Die seitlich der vertikalen Längsmittelebene des Fahrzeugs nebst Sammelbehälter getroffene Anordnung des Ladegebläses, die zum Anschluß eines seitlich an der Hinterpartie des Träger- bzw. Zugfahrzeugs (Kleintraktor) geführten Schlauches, der bspw. den Ausgang eines front- oder mittelachsig angeordneten Mähgerätes oder eines Kehrgerätes mit dem Eingang des Ladegebläses verbindet, von Nutzen ist, wird in bevorzugter Ausführung zumindest zum Teil des seitlichen Überstandes dadurch von der Sammelbehälterausgestaltung aufgefangen, daß diese zumindest an der Seite des Ladegebläses, vorzugsweise aber symmetrisch zur vertikalen Längsebene beidseitig "ausgewölbt" ausgebildet ist, insbesondere durch in Bodenrichtung gesehen einen stumpfwinkligen Verlauf der Behälterseitenwandungen, so daß der Scheitel der stumpfen Winkel seitlich nach außen weist. Zum Zwecke dieses enge Abbiegungen möglichst vermeidenden Schlauchanschlusses weist der Eingang des Ladegebläses einen Anschlußstutzen auf, der nach vorne und seitlich nach außen gerichtet ausgebildet ist.

Um neben der in Längsrichtung möglichst kurzen Ausbildung der Arbeitseinheit aus Fahrzeug und Sammelbehälter auch das Gewicht im Sinne der Manövrierfähigkeit herabzusetzen, ist in besonders bevorzugter Ausführung der Erfindung zumindest die Falle des Sammelbehälters aus Kunststoff gefertigt. Dies ermöglicht grundsätzliche auch eine rahmenfreie Halterung hinsichtlich des in Fahrtrichtung frontseitigen, die Sammelbehälter-Frontwandung umfassenden Sammelbehälterbereiches, obwohl der Verzicht auf einen Rahmen nicht unter allen Aspekten angezeigt erscheint. Eine solche sehr leichte Ausbildung der Falle hat jedoch hinsichtlich deren Betätigung insbesondere durch fernbetätigte Antriebe folgende Konsequenz: Die auf die Falle auszuübende Kraft bei der Öffnung des Sammelbehälters und damit dem Aufschwenken der Falle um eine im oberen Bereich etwa horizontal und senkrecht zur Fahrtrichtung verlaufende Achse ist dann kein Problem, wenn man eine Betätigungseinrichtung, insbesondere in Form einer hydraulischen Kolbenzylindereinrichtung hinsichtlich dieser Öffnungsbewegung eine Zugkraft über einen Hebel auf die Falle ausüben läßt. Diese derart leichtgewichtig ausgebildete Falle schließt jedoch nicht unter Eigengewicht, sondern muß auch gezielt in die Schließstellung bewegt werden. Dies geschieht dann unter Zugrundelegung der vorerwähnten Zugkraftbetätigung beim Öffnen vom selben Betätigungsglied aus gesehen unter Ausübung einer Druckkraft. Befindet sich insbesondere im unteren Kantenbereich zwischen Falle und übrigem Behälterbereich ein Hindernis, dann kann die für das Schließen aufzubringende Druckkraft das Betätigungselement zerstören, wenn es starr ausgebildet ist. Um dem zu begegnen, ist in den Kraftverlauf vom Betätigungsglied zur Falle - grundsätzlich wäre dies auch zwischen Betätigungsglied und Abstützung am übrigen Behälterteil möglich - ein unter einen Schwellwert überschreitender Druckbelastung seitlich abknickendes Bauelement eingeschaltet. In bevorzugter Ausführung ist dieses Knickelement aus der Kolbenstange einer hydraulischen Kolbenzylindereinrichtung und einem daran anschließenden Stabelement gebildet, das mit den zugewandten Kolbenstangenende über ein seitlich zur gemeinsamen Längsrichtung beider Stabelemente angeordnetes Scharnierelement verbunden ist.

Diese Betätigungseinrichtung zur Bewegung der Falle kann zugleich für die Entriegelung eines Verschlußelementes zwischen der Falle und dem übrigen Behälterbereich dienen, bspw. derart, daß der der vorgeschilderten Knickeinrichtung abgewandte Anschluß der hydraulischen Kolben-Zylinder-Einrichtung eine gewisse, der Betätigung des Verschlusses dienende Anfangsstrecke zurücklegen kann. Im Ergebnis wirkt sich dies so aus, daß im Zuge der Öffnung der Falle zunächst von der Betätigungseinrichtung her diese Entriegelungsstrecke durchlaufen wird, wobei die dadurch ausgeübte Bewegung der Öffnung des Verschlußelementes dient, woraufhin die weitere Betätigung vorzugsweise über einen Hebel auf die Falle im Sinne deren Öffnungsbewegung übertragen wird.

Im Sinne der beabsichtigten Raumersparnis in Fahrtrichtung des Zugfahrzeugs nebst Behälter sind die Verbindungselemente zwischen dem Sammelbehälter und dem Zugfahrzeug vorzugsweise ebenfalls an der erfindungsgemäß tragend ausgebildeten Sammelbehälterfrontwandung befestigt. Dabei kann es sich um Elemente handeln, die in eine quer zur Fahrtrichtung und etwa horizontal verlaufende "Anschlußstange" des Zugfahrzeugs über entsprechend hakenförmige Öffnungen eingreifen, während ein darüber angeordnetes Spannschloß die "Huckepack-Anordung" des Sammelbehälters gegenüber dem Fahrzeug bestimmt. Diese Anordnung kann insgesamt auch höhenveränderlich sein. Andererseits ist es möglich, den Sammelbehälter nebst Ladegebläse etc. an das Zugfahrzeug über eine sogenannte Dreipunktanlenkung anzuschließen. Soweit eine hinsichtlich Versetzungen in vertikaler Richtung frei bewegliche Verbindung zwischen Fahrzeug und Sammelbehälter vorgesehen ist, wird letzterer über um vertikale Achsen schwenkbare Laufräder am Boden abgestützt. Aus Platzgründen bleibt in jedem Falle der Sammelbehälter in starrer Ausrichtung zur Längsachse (Fahrtrichtung) des Träger- bzw. Zugfahrzeugs.

In jedem Falle dieser Anschlußmöglichkeiten ist sichergestellt, daß die Gelenkwelle hinsichtlich des Anschlusses an die Zapfwelle des Fahrzeugs und den Wellenstumpf des Gebläseantriebes nur eine geringe Winkelabweichung beschreibt, die den Wirkungsgrad und der Lebendauer dieser Gelenkwellenverbindung nützlich ist. Dabei ist von besonderer Bedeutung, daß die Winkel zwischen den Längsachsen der Gelenkwelle zur Zapfwelle einerseits und zum Wellenstumpf andererseits möglichst gleich sind. Dies ist bei einem Dreipunktlenkeranschluß aufgrund der Parallelogrammlenkereigenschaft von vorne herein gegeben, während man bei der Verbindung über Querstange und Spannschloß über die Einstellbarkeit des letzteren ebenfalls die Möglichkeit hat, diese Winkelübereinstimmung einzustellen (Huckepackgerät).

Ausführungsformen der Erfindung finden sich in Unteransprüchen, insbesondere im Zusammenhang mit den in der Zeichnungen wiedergegebenen Ausführungsbeispielen, deren nachfolgende Beschreibung die Erfindung näher erläutert. Es zeigen
- Figur 1: eine schematische Seitenansicht des Sammelbehälters nebst Ladegetriebe in Anordnung als Huckepackgerät an ein nur andeutungsweise partiell wiedergegebenes Trägerfahrzeug;
- Figuren 2 und 3: Rückansicht in Fahrtrichtung des Sammelbehälters nebst Ladegebläse und Seitenansicht von links in schematisierter Wiedergabe;
- Figuren 4 und 5: Frontansicht vom Fahrzeug aus auf den Sammelbehälter (in Fahrtrichtung) sowie Seitenansicht von links in schematisierter Darstellung;
- Figur 6: eine schematisierte Schnittdarstellung nach der Linie VI-VI in Figur 2;
- Figur 7: eine schematische Seitenansicht ähnlich Figur 1 mit Ausbildung des Sammelbehälters für den Anschluß an einen Dreipunkt-Lenker des Zugfahrzeugs.

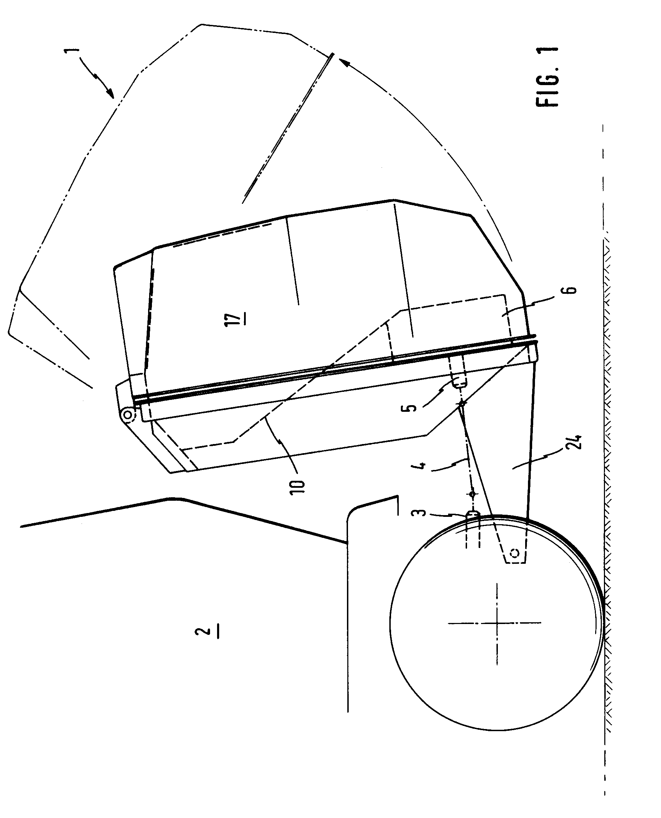

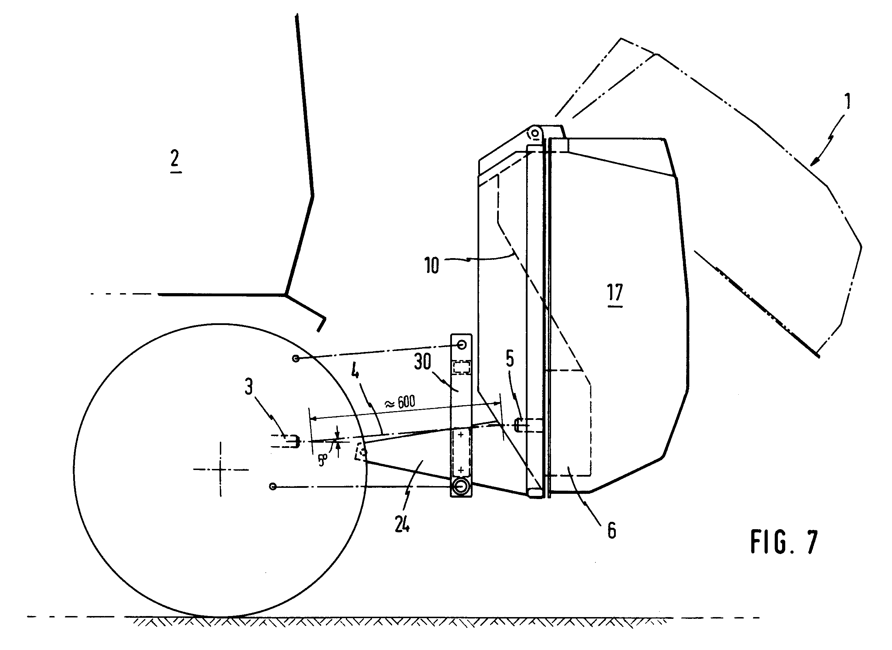

In den Figuren - die sich insoweit nur hinsichtlicher unterschiedlichen Ankupplung an das Fahrzeug entsprechend den Schemadarstellungen nach Figur 1 und Figur 7 unterscheiden - ist mit 1 die Gesamtheit des Sammelbehälters gekennzeichnet, der in integrierter Ausbildung ein Ladegebläse und dessen Antrieb beinhaltet.

Gemäß Figur 1 ist dieser Sammelbehälter 1 an ein Trägerfahrzeug 2 heckseitig als "Huckepackgerät" derart angeschlossen daß die fahrzeugseitige Zapfwelle 3 über eine nur strichpunktiert schematisch angedeutete Gelenkwelle 4 an einen Wellenstumpf 5 getriebetechnisch angeschlossen ist, der seinerseits die rotatorische Antriebsbewegung der Gelenkwelle 3 auf den Rotor des Ladegebläses 6 überträgt, und zwar mit Hilfe eines Keilriemengetriebes, das aus den eigentlichen Keilriemen (2 Stück) und den Keilriemenscheiben 11 und 12 besteht, deren erste 11 koaxial und verdrehfest an den Wellenstumpf 5 und deren zweite 12 koaxial und verdrehfest an die Rotorwelle 13 des Ladegebläses 6 angeschlossen ist. Wie bei solchen Riementrieben üblich, verlaufen die Achsen der Scheiben 11 und 12 hinsichtlich der Lagerstelle etwa in einer Ebene, in der bzw. zu der parallel auch der bzw. die verbindenden Keilriemen angeordnet sind.

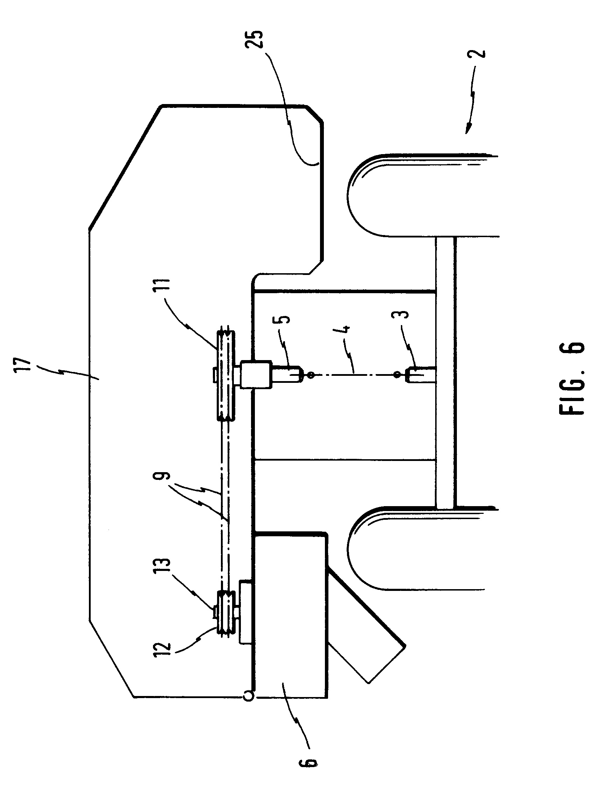

In Abweichung zu der bisherigen Vorstellung, nämlich den Sammelbehälter einerseits und das Ladegebläse (Sauggebläse) und dessen Antrieb andererseits insoweit getrennt anzuordnen, als beide über irgendwie geartete Chassiskonstruktionen gehalten sind, ist erfindungsgemäß die dem Fahrzeug 2 zugewandte und damit in Fahrtrichtung weisende Sammelbehälter-Frontwandung 10 als tragendes Element für das Ladegebläse 6 und dessen Antrieb ausgebildet. Wie die Figuren zeigen, ist diese Sammelbehälter-Frontwandung 10 nicht nur - wie bekannt - zumindest bereichsweise hinsichtlich der Fahrtrichtung zum Boden hin schräg geneigt angeordnet, damit bei Öffnen des Sammelbehälters durch Verschwenken der Falle 17 das aufgenommene Gut durch Abgleiten entleert werden kann, sondern auch in Anpassung an das benachbarte Ladegebläse und dessen Antrieb "zerklüftet" ausgebildet; dies bedeutet, daß das seitlich vertikalen Längsmittelebene des Fahrzeugs 2 plus Sammelbehälter 1 zur einen Seite hin orientiert angeordnete Gebläse einen anderen Verlauf der Frontwandung 10 des Sammelbehälters 1 erfordert, als dies im entgegengesetzten Seitenbereich der Fall ist. Wie Figur 6 erkennen läßt, ist die Frontwandung 10 dort bei 25 mit einem Wandungsverlauf ausgebildet, der im Sinne einer Vergrößerung des Behälterinnenraumes einen anderen Verlauf zeigt als der Seitenbereich, in dem das Ladegebläse 6 angeordnet ist.

Die Sammelbehälter-Frontwandung 10 ist dergestalt tragendes Element, daß eine gesonderte Halterung des eigentlichen Behälters einerseits und des Gebläses nebst Antriebseinrichtung andererseits entfällt, d.h. die Sammelbehälter-Frontwandung 10 übernimmt die Aufgaben eines Chassisrahmens derart, daß das Ladegebläse 6 und dessen Antrieb (Wellenstumpf 5) mittels dieser Frontwandung gehalten werden.

Dies kann grundsätzlich dadurch geschehen, daß an der in Fahrtrichtung weisenden Außenseite der Frontwandung 10 entsprechende Lagereinrichtungen ausgebildet bzw. befestigt sind. In bevorzugter Ausführung durchgreifen jedoch die Rotorwelle 13 einerseits und der Wellenstumpf 5 andererseits diesen Haltebereich der Frontwandung 10, d.h. die Lagerung ist unmittelbar im Durchgangsbereich der Frontwandung 10 vorgesehen. Das hat zur Folge, daß die Übertragungseinrichtung aus den Keilriemenscheiben 11 und 12 und den verbindenden Keilriemen 9 insoweit im Innenraum des Sammelbehälters angeordnet sind. Folgerichtig muß zur Vermeidung von Betriebsstörungen und Verschmutzungen diese getriebliche Übertragungseinrichtung 11, 9, 12 zum Behälterinneren hin abgedeckt werden, was durch dünnwandige Blechkonstruktionen oder Kunststoffabdeckungen 14 geschehen kann, die ihrerseits keinerlei tragende Funktion haben. Sieht man vom Zentrum des Behälterinneren her oder anders ausgedrückt von der Falle 17 her auf die Frontwandung 10, so erscheint deren dem Behälter zugewandte Innenseite zusammengesetzt aus Randbereichen der Frontwandung und den vorgenannten Abdeckungen der Getriebeeinrichtung.

Wegen des Verlaufes eines Zuführschlauches zwischen einem Mäh- bzw. Kehrgut aufnehmenden Gerät im Front- oder Zwischenachsbereich des Träger- oder Zugfahrzeugs und dem Saugeingang 8 des Ladegebläses 6 seitlich außerhalb des Umrisses des Fahrzeugs wird das Ladegebläse in besonders bevorzugter Ausführung an der entsprechenden Seite des Sammelbehälters, also von dessen vertikaler Längsmittelebene entfernt, angeordnet. Dies kann dazu führen, daß die Seitenwandungen des Sammelbehälters 1 mit Auswölbungen 16 versehen sind, bspw. in Form einer mit dem Scheitel nach außen weisenden stumpfwinkligen Ausbildung, wie dies die Figuren zeigen. Es ist grundsätzlich möglich, daß auf diese Weise das Gehäuse des Ladegebläses 6 innerhalb dieser Umrißformen in Fahrtrichtung gesehen untergebracht werden kann. In anderer Ausführung - wie sie die Zeichnungen zeigen - ragt das Gehäuse des Gebläses 6 an der entsprechenden Anordnungsseite noch über die Auswölbung 16 des Gehäuses hinaus, insbesondere dann, wenn das Ladegebläse noch im Bereich des Sammelbehälterteils außerhalb der Falle angeordnet ist.

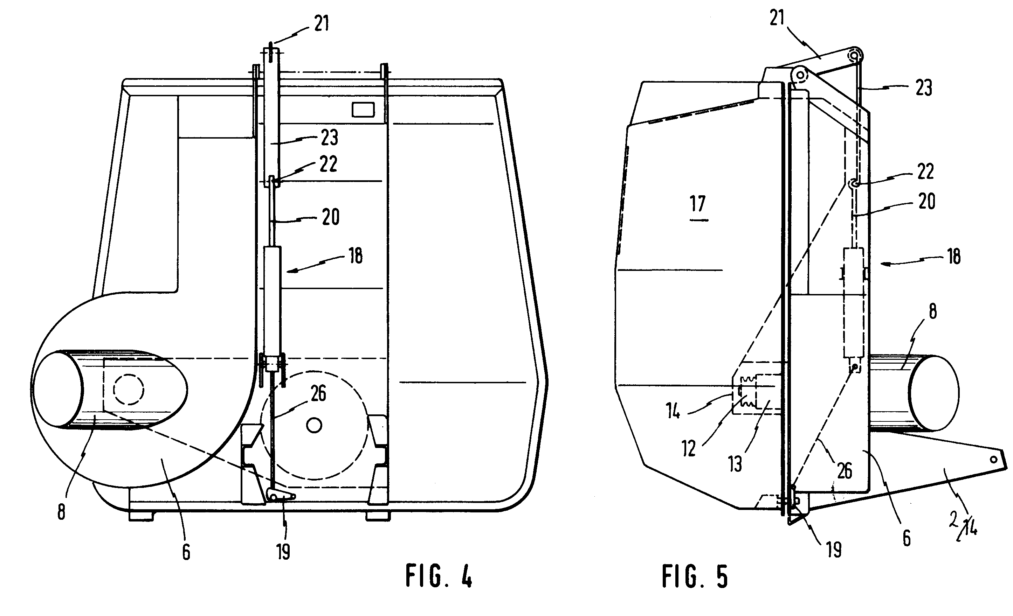

Soweit der Behälter nicht von Hand geöffnet wird, sondern gesteuert, bspw. über eine hydraulische Kolben-Zylinder-Einrichtung 18, greift deren einer Teil, hier die (verlängerte) Kolbenstange 20 an einem Hebel 21 an, der an der Falle 17 festgelegt ist, welche gegenüber dem übrigen Sammelbehälterteil um eine horizontale und senkrecht zur Fahrtrichtung verlaufende Achse verschwenkbar gelagert ist - Figuren 4 und 5 -. Da die Falle 17 gegenüber dem verbleibenden Behälterteil in der Schließlage mittels einer Verschlußeinrichtung 19 arretiert ist, muß vor Aufschwenken der Falle 17 in den Öffnungs- bzw. Entleerungszustand diese Verschlußeinrichtung entriegelt werden. Zu diesem Zwecke ist gemäß Ausführungsbeispiel nach den Figuren 4 und 5 der dem Hebel 21 abgewandte Zylinder der Kolben-Zylinder-Einrichtung 18 um eine bestimmte Wegstrecke verschiebbar und über ein Betätigungsglied mit der Verschlußeinrichtung 19 derart verbunden, daß vor Öffnen der Falle 17 für einen beabsichtigten Entleerungsvorgang zunächst der Zylinder diese Wegstrecke zurücklegt und dabei die Verschlußeinrichtung 19 über das Betätigungsglied 26 entriegelt, bevor die Kolbenstange 20 ausfährt und über den Hebel 21 die Öffnungsbewegung der Falle 17 kräftemäßig einleitet. Wie die Verschlußeinrichtung 19 und das Betätigungsglied 26 im einzelnen ausgebildet sind, wird hier nicht näher erläutert, weil es hierfür eine Vielzahl gängiger Vorstellungen gibt.

Insbesondere wenn die Falle 17 aus Kunststoff und damit besonders leichtgewichtig ausgestaltet ist, ergibt sich im Zuge des Schließvorganges dann ein Problem, wenn zwischen den Seiten- und insbesondere der Unterkante der Falle und der benachbarten Berandung des übrigen Behälterbereiches ein Widerstand auftritt, bspw. durch im Zuge der Entleerung in diesen Bereich hängengebliebene Äste oder dgl. Um den Schließvorgang sicherzustellen, muß diese leichtgewichtige Falle 17 gezielt, d.h. im vorliegenden Falle durch den Öffnungsvorgang umgekehrte Beaufschlagung der Kolben-Zylinder-Einrichtung 18 herbeigeführt werden. Im Falle eines vorerwähnten Hindernisses könnten jedoch Beschädigungen auftreten, weshalb in bevorzugter Ausführung die Kolben-Zylinder-Einrichtung zwar unnachgiebig auf Zug (Öffnungsvorgang der Falle) jedoch nachgiebig auf Druck (Schließbewegung der Falle) ausgebildet ist. Im vorliegenden Beispiel ist dazu die Verbindung zwischen dem Kolben und dem Hebel 21 der Falle 17 als "Knickstab" ausgebildet, und zwar wiederum speziell im Hinblick auf das Ausführungsbeispiel nach den Figuren 4 und 5 dergestalt, daß die eigentliche Kolbenstange 20 der Kolben-Zylinder-Einrichtung 18 über ein Gelenk 22 an eine Verbindungsstange 23 angeschlossen ist, die ihrerseits den Hebel 21 mit der Kolbenstange 20 verbindet. Das Gelenk 22 ist dabei derart aus der kraftmäßig gesehen Längsrichtung von Kolbenstange 20 und Verbindungsstange 23 seitlich versetzt angeordnet, daß bei Druckbeaufschlagung dieses Gestänges über einen gewissen Wert hinaus (Hindernis zwischen Klappe 17 und übrigem Sammelbehälterbereich im Zuge des Schließvorganges) eine Verschwenkung um das Gelenk 22 stattfindet, so daß dieses Hindernis nicht zu einer Beschädigung der Kolben-Zylinder-Einrichtung und/oder der Falle führt.

Wie aus den Figuren ersichtlich, ist die Falle 17 des Sammelbehälters mit zwei siebartig durchbrochenen Behälterwandungsbereichen 27 und 28 versehen, von denen der erstere in der in Fahrtrichtung nach rückwärts weisenden Wandung der Falle 17 angeordnet ist. Damit wird erreicht, daß sich der Behälter - hier insbesondere der von der mehr oder weniger groß zu wählenden Falle 17 umschlossene Raum - gut füllen kann. Die im Zuge der Füllung zunehmende Druckbeaufschlagung nach oben hin wird durch das Luftauslaßsieb 28 abgebaut, die von einem Deckel 29 übergriffen ist. Dieser Deckel ist von dem Luftauslaßsieb 28 aus gesehen in Fahrtrichtung nach vorne und senkrecht zu dieser angeordnete Achse verschwenkbar und öffnet sich unter entsprechender Luftzufuhr durch das Luftauslaßsieb 28. Damit wird erreicht, daß auch nach weitgehender Behälterfüllung die noch aus dem Behälterinneren abzuführende Luft den Fahrer des Träger- bzw. Zugfahrzeugs 2 nicht behindert und daß zugleich aufgrund der Verschwenkstellung des Deckels 19 eine Anzeige für den Befüllungsgrad des Sammelbehälters gegeben ist. Auch eine Verstopfung von Ladegebläse und/oder Zuführschlauch kann durch entsprechendes Abschwenken des Deckels 19 visuell angezeigt werden.

An der Sammelbehälter-Frontwandung 10 als tragendes Element sind auch die Anschlußausbildungen 24 vorgesehen, die für die Verbindung zwischen Fahrzeug und Sammelbehälter erforderlich sind. Dafür gibt es grundsätzlich zwei Möglichkeiten:

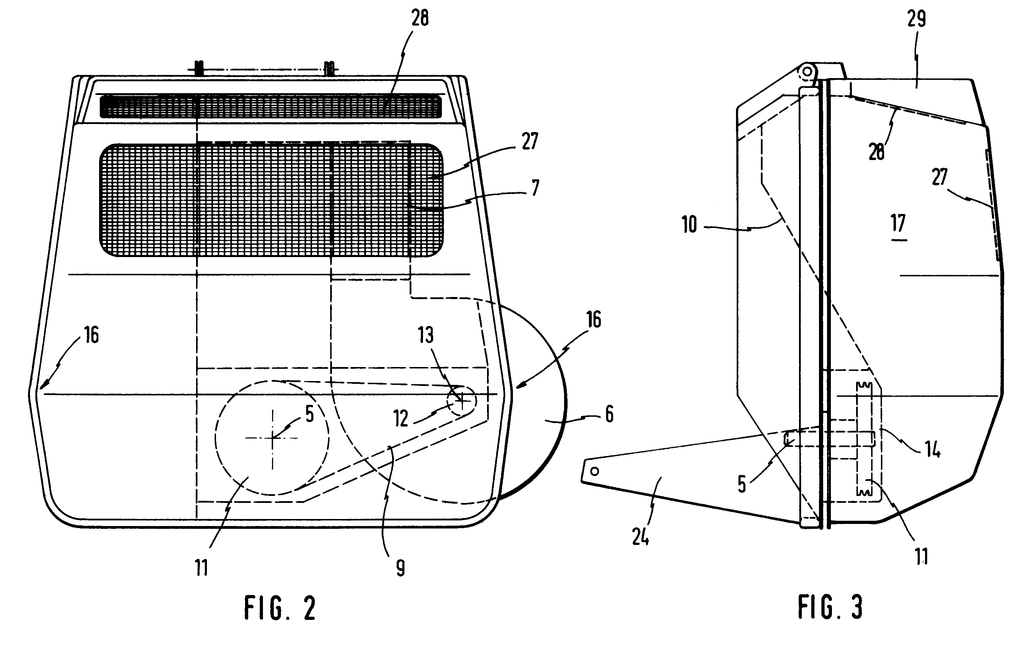

Am fahrzeugseitigen Ende der Anschlußausbildungen - Figuren 1 bis 5 - ist postuliert, daß diese in eine senkrecht zur Fahrtrichtung verlaufende fahrzeugseitige Stange eingehängt werden. In Figur 1 ist dabei vorausgesetzt, daß im Bereich oberhalb der Anschlußausbildungen 24 eine Spannschloßverbindung vorgesehen, die den um die vorgeschilderte Achse verschwenkbaren Sammelbehälter in einer bestimmten räumlichen Lage fixiert. Diese Spannschloßverbindung ist nicht dargestellt. Es handelt sich hier um übliche Verbindungsausbildungen zwischen Fahrzeug und "Anhängergerät", die keiner näheren Erläuterung bedarf. Im vorliegenden Falle ist aber verständlich, daß durch das nicht dargestellte Spannschloß eine Neigung des Sammelbehälters 1 gegenüber dem Fahrzeug 2 bzw. dem Boden hergestellt werden kann, die eine Winkelausrichtung der Gelenkwelle 4 zu der Zapfwelle 3 und zu dem Wellenstumpf 5 des Ladegebläsesantriebes in kleiner und etwa übereinstimmender Größenordnung erlaubt, was den Wirkungsgrad und der Lebensdauer dieser Gelenkwellen-Getriebeverbindung zugute kommt. Obwohl die in Figur 1 insoweit angedeutete und vorbeschriebene Kupplung an das Fahrzeug 2 gelenkig ausgebildet sein kann, so daß der Sammelbehälter 1 in nicht dargestellter Weise über um vertikale Achsen schwenkbare Räder am Boden abgestützt ist, wird man diese Ausbildung in erster Linie bei Anbringung als echtes Huckepackgerät wählen.

In Figur 7 ist eine Ankupplung des Sammelbehälters 1 an das Fahrzeug 2 über eine bekannte Dreipunktanlenkung angedeutet, und zwar durch ein ebenfalls an sich bekanntes dreieckiges Dreipunkt-Anlenkglied 30, das für diesen Kupplungsfall an die Anschlußausbildungen 24 in etwa vertikaler Ausrichtung angeschweißt ist. Eine solche Ausbildung wird man bei häufigem Wechsel der Zusatzgeräte an ein Träger-bzw. Zugfahrzeug 2 mit entsprechender heckseitiger Kupplungsausbilding bevorzugt wählen. Eine solche Dreipunktankupplung kann starr oder aber auch in vertikaler Richtung frei verschwenkbar ausgebildet sein, in welch letzterem Falle der Sammelbehälter 1 wiederum über um vertikale Achsen verschwenkbare Räder selbsttragend an dem Boden abgestützt ist. Eine insoweit eigenständige, zweiachsige Anhängerausbildung, die mit dem Fahrzeug über eine Deichsel verbunden ist, wird im Sinne der Aufgabe einer möglichst kurzen Längsabmessung des Fahrzeugs plus Sammelbehälters weniger in Frage kommen.

## Patentansprüche

1. Sammelbehälter (1) für Kehrgut, Mähgut oder dergleichen mit einem von der Zapfwelle (3) eines Träger- oder Zugfahrzeuges (2) ausgehend über eine Gelenkwelle (4) angetriebenen Ladegebläse (6), dessen Ausgang (7) in den Sammelbehälter (1) mündend angeordnet und dessen Eingang (8) über eine Förderleitung an ein Kehrgutaufnahmegerät, Mähgerät oder dergleichen angeschlossen ist, wobei das Ladegebläse (6), der gebläseseitige Gelenkwellenanschluß (5) und eine getriebliche Übertragungseinrichtung (9) zwischen diesem und dem Rotor des Ladegebläses (6) im Bereich der dem Träger- oder Zugfahrzeug zugewandten, zur Fahrfläche gesehen vom grundsätzlichen Verlauf her gegen die Fahrtrichtung geneigt verlaufenden Sammelbehälterfrontwandung (10) angeordnet sind, die gemeinsam mit einer dem Träger- oder Zugfahrzeug abgewandt angeordnete, um eine im oberen Behälterbereich befindliche horizontal und senkrecht zur Fahrtrichtung verlaufende Achse verschwenkbaren Falle den Innenraum des Sammelbehälters begrenzt,
**dadurch gekennzeichnet**,
daß die Sammelbehälterfrontwandung (10) als tragendes Halte- und Lagerelement für das Ladegebläse (6) und den gebläseseitigen Gelenkwellanschluß, d.h. den daran angeschlossenen Wellenstumpf (5), der ein Getriebeelement (11) für die Antriebsverbindung (11, 9, 12) zu dem Rotor des Ladegebläses (6) trägt, ausgebildet ist.

2. Behälter nach Anspruch 1,
**dadurch gekennzeichnet**,
daß der Wellenstumpf (5) des Gelenkwellenanschlusses und/oder der Rotorwelle (13) des Ladegebläses (6) die Sammelbehälterfrontwandung (10) durchgreifend ausgebildet sind,wobei insbesondere die dem Behälter zugewandte Gebläsegehäusestirnseite der Sammelbehälter-Frontwandung (10) entspricht.

3. Behälter nach Anspruch 1 oder 2,
**dadurch gekennzeichnet**,
daß die getriebliche Übertragungseinrichtung (11, 9, 12), insbesondere unter Verwendung eines Keilriemens (9), vorzugsweise als direkter Riementrieb, bevorzugt mit einer Übersetzung ungleich 1:1, zwischen dem Wellenstumpf (5) des gebläseseitigen Gelenkwellenanschlusses und dem Rotor des Ladegebläses (6) innenseitig der Sammelbehälterfrontwandung (10) verlaufend angeordnet und zum Behälterinnenraum gesehen von einem dünnen Abdeckblech (14) übergriffen ist, wobei insbesondere die Lagermengen der Rotorwelle (13) und des Wellenstumpfes (5) in einer senkrecht zu deren Längsachsen verlaufenden Ebene angeordnet sind.

4. Behälter nach einem der Ansprüche 1 bis 3,
**dadurch gekennzeichnet**,
daß die Sammelbehälterfrontwandung (10) den Konturen der gehaltenen Geräte - Ladegebläse (6), behälterseitiger Gelenkwellenanschluß (5), getriebliche Übertragungseinrichtung (11, 9, 12) - durchgehend oder teilweise angepaßt ausgeformt ist.

5. Behälter nach einem der Ansprüche 1 bis 4,
**dadurch gekennzeichnet**,
daß das Ladegebläse (6) hinsichtlich der Fahrzeuglängsachse bzw. des Gelenkwellenanschlusses (5) seitlich versetzt angeordnet ist und vorzugsweise einen schräg nach außen gerichteten Ansaugstutzen aufweist.

6. Behälter nach Anspruch 5,
**dadurch gekennzeichnet**,
daß die Seitenwandung (15) zur Aufnahme des Ladegebläses (6) eine seitliche Auswölbung (16) aufweist.

7. Behälter nach Anspruch 6,
**dadurch gekennzeichnet**,
daß die seitliche Auswölbung (16) zu beiden Seiten der Fahrzeuglängsachse symmetrisch ausgebildet ist.

8. Behälter nach einem der Ansprüche 5 bis 7,
**dadurch gekennzeichnet**,
daß die Sammelbehälterfrontwandung (10) senkrecht zur Fahrzeuglängsachse unsymmetrisch ausgebildet ist, insbesondere einen an der der Aufnahme des Ladegebläses (6) gegenüberliegenden Seite den Hohlraum des Sammelbehälters (1) vergrößernden Wandungsverlauf (25) aufweist.

9. Behälter nach einem der Ansprüche 1 bis 8,
**dadurch gekennzeichnet**,
daß in Seitenansicht gesehen die an der Sammelbehälterfrontwandung (10) gehaltenen Einrichtungen bis in den von der geschlossenen Falle des Behälters umschlossenen Raum hineinragend ausgebildet sind.

10. Behälter nach einem der Ansprüche 1 bis 9,
**dadurch gekennzeichnet**,
daß die Falle (17) als Teil des Sammelbehälters (1) aus Kunststoff ist und mittels einer Betätigungseinrichtung - insbesondere Kolben-Zylinder-Einrichtung (18) - zu öffnen und zu schließen ist, die einen Endes an der Falle (17) und anderen Endes an einem Betätigungsglied (26) für eine zwischen Sammelbehälterfrontwandung (10) bzw. daran anschließenden Seitenwandungen und der Falle vorgesehene Verschlußeinrichtung (19) angreift.

11. Behälter nach Anspruch 10,
**dadurch gekennzeichnet**,
daß die - insbesondere an einem die Falle betätigenden Hebel (21) angreifende - Kolbenstange (20, 23) der Kolben-Zylinder-Einrichtung (18) als gegen Druckbeaufschlagung sich seitlich verformend ausweichender Knickstab ausgebildet ist.

12. Behälter nach Anspruch 11,
**dadurch gekennzeichnet**,
daß der Knickstab durch eine an die eigentliche Kolbenstange (20) über ein Gelenk (22) angeschlossene Verbindungsstange (23) gebildet ist, wobei das Gelenk (22) die Kolbenstange (20) und die Verbindungsstange (23) hinsichtlich ihrer Längsrichtungen versetzt miteinander verbindet.

13. Behälter nach Anspruch 12,
**dadurch gekennzeichnet**,
daß an der Sammelbehälterfrontwandung (10) auch die Anschlußausbildungen (24) für die Verbindung mit dem Träger- oder Zugfahrzeug (2) festgelegt sind, die den Behälter als Huckepackgerät starr oder als höhenbeweglich in gleicher Längsachsausrichtung über eigene um vertikale Achsen schwenkbare Räder selbstständig auf dem Boden abgestützt mitlaufend halten.

14. Behälter nach einem der Ansprüche 1 bis 13,
**dadurch gekennzeichnet**,
daß das Ladegbläse (6) innerhalb der Behälter- bzw. Fallenbreite aufgenommen ist.

15. Behälter nach einem der Ansprüche 1 bis 14,
**dadurch gekennzeichnet**,
daß der Sammelbehälter (1) zumindest ein Luftauslaßsieb (27, 28) aufweist, das in der oberen Fallenabschlußwandung angeordnet und von einem um eine horizontale und quer zur Fahrtrichtung verlaufende sowie dem Luftauslaßsieb (28) in Fahrtrichtung gesehen vorgelagerte Achse verschwenkbaren Deckel (29) übergriffen ist.

16. Behälter nach einem der Ansprüche 2 bis 15,
**dadurch gekennzeichnet**,
daß die Innenseite des Behälterinnenraumes frontseitig gesehen aus einem Bereich der Frontwandung (10) selbst und einem Bereich der Abdeckung (14) zusammengesetzt ist.

## Claims

1. Collector box (1) for sweepings, grass cuttings, or the like, with a blower (6) driven via a universal joint propeller shaft (4) from the power take-off (3) of a carrier or tractor vehicle (2), with an outlet (7) in the collector box (1) and an inlet (8) which is connected to a sweeper unit, mower, etc., via a conveyor tube, where the blower (6), the universal joint propeller shaft connection (5) to the blower and a gear transmission unit (9) between this and the blower rotor (6) are arranged in the region of the front of the collector box (10), which faces the carrier or tractor vehicle and essentially points away from the direction of travel, which, together with a swinging trap, facing away from the carrier or tractor vehicle, and which pivots about an axis in the upper part of the container, horizontal and perpendicular to the direction of travel, defines the inner area of the collector box, characterised in that the front of the collector box is designed as a load-bearing retaining and bearing element for the blower (6) and the universal joint propeller shaft connection to the blower, i.e. the shaft end connected to the blower (5), which carries a gear element (11) for the drive connection (11, 9, 12) to the blower rotor (6).

2. Container according to claim 1, characterised in that the shaft end (5) of the universal joint propeller shaft and/or the rotor shaft (13) of the blower (6) are constructed so as to pass through the collector box front wall, whereby the front face of the blower housing, which faces the collector box, corresponds especially to the collector box front wall (10).

3. Container according to claims 1 and 2, characterised in that the gear transmission equipment (11, 9, 12), especially using a drive belt (9), preferably a direct belt drive, preferably with a transmission ratio not equal to 1:1, is arranged to run inside the collector box front wall between the shaft end (5) of the universal joint propeller shaft connection at the blower and the rotor of the blower (6), and, seen from the inside of the collector box, is covered by a thin covering plate (14), whereby the bearing sets of the rotor shaft (13) and the shaft end (5) are especially arranged to run in a plane perpendicular to their longitudinal axes.

4. Container according to one of claims 1 to 3, characterised in that the collector box front wall (10) is shaped in order to match the contours, completely or partially, of the apparatus contained within, i.e. blower (6), universal joint propeller shaft connection at the blower side (5), gear transmission equipment.

5. Container according to one of claims 1 to 4, characterised in that the blower (6), is mounted offset to the side, in comparison with the vehicle's longitudinal axis or the universal joint propeller shaft connection, and is preferably fitted with an air intake facing obliquely outwards.

6. Container according to claim 5, characterised in that the side walls (15) are bowed outwards (16) to accept the blower (6).

7. Container according to claim 6, characterised in that this side-bowing (16) is symmetrical on either side of the vehicle's longitudinal axis.

8. Container according to one of claims 5 to 7, characterised in that the collector box front wall (10) is mounted asymmetrical and perpendicular to the vehicle's longitudinal axis, especially on the side opposite the air intake of the blower (6), where a wall configuration (25) enlarges the collecting box cavity (1).

9. Container according to one of claims 1 to 8, characterised in that when seen from a side elevation, the equipment mounted on the collector box front wall (10) projects into the area occupied by the closed trap in the collector box

10. Container according to one of claims 1 to 9, characterised in that the trap (17), as a part of the collector box (1), is made from synthetic material, and can be opened and closed by means of an operating mechanism - especially a piston-cylinder assembly (18) - which has one end attached to the trap (17) and the other end attached to an operating device (26) for a closing mechanism (19) designed to be located between the collector box front wall (10), or side walls attached to it, and the trap itself.

11. Container according to claim 10, characterised in that the piston rod (20, 23) of the piston-cylinder assembly (18) - especially working on a lever (21) which operates the trap - is constructed as an elbowed rod which is deformed and moved to the side to the side to relieve the effects of pressurisation.

12. Container according to claim 11, characterised in that the elbowed rod is formed from a connecting rod (23) connected to the actual piston rod (20) by means of a joint (22), whereby the joint (22), the piston rod (20) and the connecting rod (23) are connected to each other with regard to their longitudinal directions.

13. Container according to claim 12, characterised in that the connection struts (24) for attachment to the carrier or tractor vehicle (2) are fixed to the collector box front wall, which hold the collector box independently on the ground as a piggy-back mechanism, either rigidly or vertically adjustably, in the same longitudinal axis via a plurality of wheels, which can be rotated about their vertical axis.

14. Container according to one of claims 1 to 13, characterised in that the blower (6) is contained within the width of the collector box or trap.

15. Container according to one of claims 1 to 14, characterised in that the collecting box (1) has at least one air outlet screen (27, 28) which is located in the upper wall bordering the trap, and is covered by a hinged lid (29) which tilts perpendicular to the direction of travel, about a horizontal axis which is in front of the air outlet (29) as regards the direction of travel.

16. Container according to one of claims 2 to 15, characterised in that the interior of the collector box, as seen from the front, is comprised of an area of the front wall (10) itself and a cover area (14).

## Revendications

1. Réceptacle (1) pour recueillir des balayures, des produits fauchés ou produits analogues à l'aide d'une machine soufflante de chargement (6) entraînée par un arbre à cardan (4) relié à la prise de force (3) d'un véhicule de support ou véhicule tracteur (2) dont la sortie (7) débouche dans un réceptacle (1) et dont l'entrée (8) est reliée par une conduite de transfert à un appareil de collecte de produits de balayage, de produits fauchés ou analogues, la machine soufflante (6), le raccordement d'arbre articulé (5) du côté de la machine soufflante et une installation de transmission (9), étant prévus entre celui-ci et le rotor de la machine soufflante (6) au niveau de la paroi frontale (10) du réceptacle inclinée, dans la direction de circulation, vers la surface de roulement, à partir du tracé de base, du côté tourné vers le véhicule de support ou véhicule tracteur, et qui délimite le volume du réceptacle, en commun avec un couvercle pivotant autour d'un axe horizontal perpendiculaire à la direction de déplacement et se trouvant dans la partie supérieure du réceptacle, du côté opposé au véhicule de support ou véhicule tracteur,
caractérisé en ce que
la paroi frontale (10) du réceptacle est un élément de support et de montage de la machine soufflante (6) et du raccord d'arbre à cardan du côté de la machine soufflante c'est-à-dire de l'élément d'axe (5) relié à celui-ci, qui porte un élément de transmission (11) pour la liaison d'entraînement (11, 9, 12) vers le rotor de la machine soufflante (6).

2. Réceptacle selon la revendication 1,
caractérisé en ce que
l'élément d'axe (5) du raccordement de l'arbre à cardan et/ou l'axe du rotor (13) de la machine soufflante de chargement (6) traversent la paroi frontale (10) du réceptacle, et notamment la face frontale du carter de la machine soufflante, tournée vers le réceptacle, correspond à la face frontale (10) du réceptacle.

3. Réceptacle selon la revendication 1 ou 2,
caractérisé en ce que
l'installation de transmission (11, 9, 12) notamment en utilisant une courroie trapézoïdale (9) de préférence comme entraînement direct par courroie notamment avec un rapport différent de 1 :1 entre l'élément d'axe (5) du branchement de l'arbre à cardan du côté de la machine soufflante et le rotor de la machine soufflante de chargement (6), est prévue du côté intérieur de la paroi frontale (10) du réceptacle et vue vers l'intérieur du réceptacle, cette transmission étant entourée par une mince tôle de recouvrement (14), et en particulier les paliers de l'arbre de rotor (13) et de l'élément d'axe (5) sont situés dans un plan perpendiculaire aux axes longitudinaux.

4. Réceptacle selon l'une des revendications 1 à 3,
caractérisé en ce que
la paroi frontale (10) du réceptacle est formée de manière adaptée en continu ou partielle, au contour des appareils portés (machine soufflante de chargement (6), raccord d'arbre à cardan (5) du côté du réceptacle, transmission de mouvement (11, 9, 12)).

5. Réceptacle selon l'une des revendications 1 à 4,
caractérisé en ce que
la machine soufflante de chargement (6) est décalée latéralement par rapport à l'axe longitudinal du véhicule ou du branchement de l'arbre à cardan (5) et présente un ajutage de raccordement dirigé de préférence en biais vers l'extérieur.

6. Réceptacle selon la revendication 5,
caractérisé en ce que
la paroi latérale (5) présente une partie bombée latérale (16) pour recevoir la machine soufflante de chargement (6).

7. Réceptacle selon la revendication 6,
caractérisé en ce que
la partie bombée latérale (16) est symétrique vers les deux côtés de l'axe longitudinal du véhicule.

8. Réceptacle selon l'une des revendications 1 à 7,
caractérisé en ce que
la paroi frontale (10) du réceptacle est non symétrique perpendiculairement à l'axe longitudinal du véhicule, et notamment d'un côté opposé au logement de la machine soufflante de chargement (6), il y a une forme de paroi (25) qui agrandit la cavité du réceptacle (1).

9. Réceptacle selon l'une des revendications 1 à 8,
caractérisé en ce que
vues dans la direction latérale, les installations portées par la paroi frontale (10) du réceptacle vont jusqu'à pénétrer dans le volume entouré par le couvercle fermé du réceptacle.

10. Réceptacle selon l'une des revendications 1 à 9,
caractérisé en ce que
le couvercle (17) fait partie du réceptacle (1) en matière plastique ; il s'ouvre et se ferme à l'aide d'une installation de manoeuvre notamment d'un vérin (18) qui est relié par une extrémité au couvercle (17) et par l'autre extrémité à un élément de manoeuvre (26) pour une installation de fermeture (19) prévue entre la paroi frontale (10) du réceptacle ou des parois latérales adjacentes à cette paroi frontale, et le couvercle.

11. Réceptacle selon la revendication 10,
caractérisé en ce
la tige de piston (20, 23) du vérin (18) attaquant notamment un levier (21) actionnant le couvercle, est réalisée sous la forme d'une tige pliante s'échappant en se déformant latéralement sous l'effet d'une pression.

12. Réceptacle selon la revendication 11,
caractérisé en ce que
la tige pliante est une tige de liaison (23) reliée à la tige de piston (20) proprement dite par une articulation (22), cette articulation (22) reliant la tige de piston (20) et la tige de liaison (23) de manière décalée dans leur direction longitudinale.

13. Réceptacle selon la revendication 12,
caractérisé en ce que
les éléments de raccordement (24) pour la liaison avec le véhicule de support ou tracteur (2) sont fixés sur la paroi frontale (10) du réceptacle, éléments qui reçoivent le réceptacle comme outil arrière porté, de manière rigide ou mobile en hauteur dans un même alignement d'axe longitudinal en s'appuyant sur le sol, et de manière autonome par des roues pivotant autour d'axes verticaux.

14. Réceptacle selon l'une des revendications 1 à 13,
caractérisé en ce que
la machine soufflante de chargement (6) est logée dans la largeur du réceptacle ou du couvercle.

15. Réceptacle selon l'une des revendications 1 à 14,
caractérisé en ce que
le réceptacle (1) comporte au moins un tamis de sortie d'air (27, 28) prévu dans la paroi supérieure fermant le couvercle, et un volet (29) pivotant autour d'un axe horizontal transversal à la direction de déplacement et qui est en amont du tamis de sortie d'air (28) selon la direction de déplacement.

16. Réceptacle selon l'une des revendications 1 à 15,
caractérisé en ce que
le côté intérieur du volume du réceptacle, vu frontalement, se compose de la zone de la paroi frontale (10) elle-même et d'une zone du volet (14).
